Europäisches Patentamt

European Patent Office

Office européen des brevets

(19)

(11) Publication number: **0 139 451**
**B1**

(12) **EUROPEAN PATENT SPECIFICATION**

(45) Date of publication of patent specification: **21.10.87**

(21) Application number: **84306139.1**

(22) Date of filing: **07.09.84**

(51) Int. Cl.⁴: **H 01 R 39/38, H 01 R 43/14**

(54) **Brush box.**

(30) Priority: **09.09.83 GB 8324263**

(43) Date of publication of application:
**02.05.85 Bulletin 85/18**

(45) Publication of the grant of the patent:
**21.10.87 Bulletin 87/43**

(84) Designated Contracting States:
**DE FR GB IT**

(56) References cited:
**DE-A-2 819 352**
**GB-A-1 151 636**
**US-A-3 924 147**
**US-A-4 074 162**
**US-A-4 266 155**

(73) Proprietor: **Black & Decker Inc.**
**Drummond Plaza Office Park 1423 Kirkwood Highway**
**Newark Delaware 19711 (US)**

(72) Inventor: **Sanders, Anthony Jonathan**
**Keep Cottage Mill Lane**
**Redworth Darlington Co. Durham (GB)**

(74) Representative: **Bardo, Julian Eason et al**
**Abel & Imray Northumberland House 303-306 High Holborn**
**London, WC1V 7LH (GB)**

Courier Press, Leamington Spa, England.

## Description

The invention relates to brush boxes for electric motors.

The design of small electric motors such as may be used in power tools receives a very great amount of attention. In particular attempts are made to facilitate assembly processes that are carried out in the factory and to facilitate subsequent maintenance of the motor. The most common maintenance operation is that of brush replacement.

In an already practised method of brush replacement the rear end of the brush box is bent open to gain access to the brush and spring. That method is described in U.S. Patent Specification No. 3,924,147. While this arrangement will work once or twice, repeated bending of the rear end of the brush box leads eventually to the end breaking off. One solution to this problem that has been proposed is to make the rear end of the brush box replaceable, but of course this complicates the design of the brush box.

It is an object of the invention to provide an improved form of brush box.

According to the invention there is provided a brush box made of sheet material and comprising side and top walls, an end wall and an opening opposite the end wall, characterised in that the end wall is joined to one of the side walls by means of a tongue of sheet material formed in the one side wall by slots in the one wall such that the end wall is movable between a closed position in which it obstructs the associated end of brush box and an open position in which the obstruction is substantially removed by bending the tongue along a substantial portion of its length.

The tongue provides a substantial length along which bending can take place and thus the bending strain at any one location is reduced so that the end wall can be moved repeatedly between the open and closed positions without danger of its breaking off.

The tongue preferably has a length of at least one sixth of the length of the brush box.

By way of example, an embodiment of the invention will now be described with reference to the accompanying drawings, of which:

Fig. 1 is a sectional side view of a motor mounted in the body of a hedge trimmer,

Fig. 2 is a sectional view of an end cap assembly forming part of the motor shown in Fig. 1, and

Fig. 3 shows a blank of a brush box of the end cap assembly.

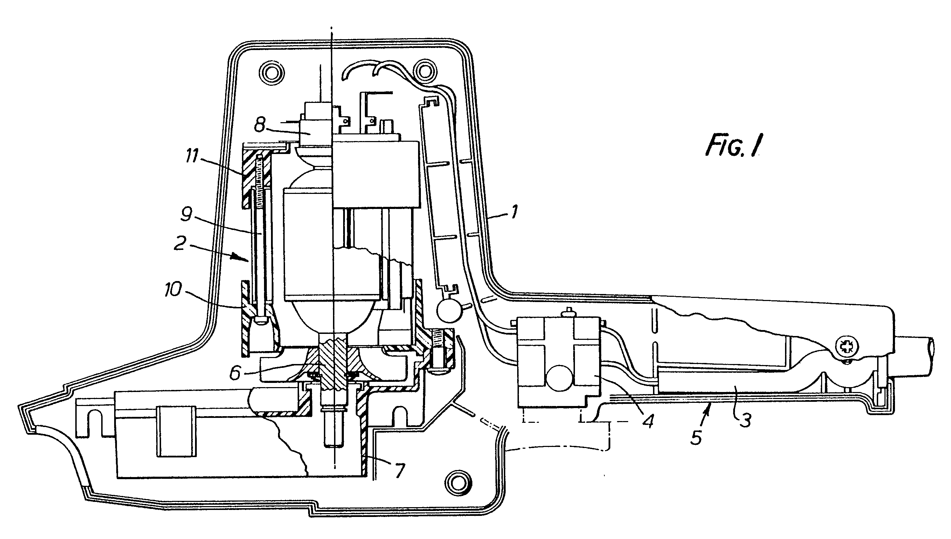

Referring first to Fig. 1, a hedge trimmer has an outer casing 1 of clam shell construction, a motor 2 connectible to a power supply by a cable 3 via a switch 4 in a handle 5. The motor has an armature shaft 6 which drives the blades (not shown) of the trimmer via gears (not shown) mounted in a gearbox housing 7.

The motor 2 has an armature on the armature shaft 6, a commutator 8, a stator assembly 9, an end cap 10 at the gearbox end and an end cap assembly 11 at the commutator end. The end cap 10, end cap assembly 11 and stator assembly 9 are bolted together and the end cap 10 and the gearbox housing 7 are also bolted together. The armature shaft is mounted for rotation at one end in a bearing of the end cap assembly 11 and at the other end in a bearing in the gearbox housing 7.

The present invention is concerned primarily with the structure of brush boxes that are mounted on the end cap assembly 11 and it should be understood that the invention may find a wide variety of applications in any case where a brush box is to be employed. The description below is therefore concerned primarily with details of the brush boxes.

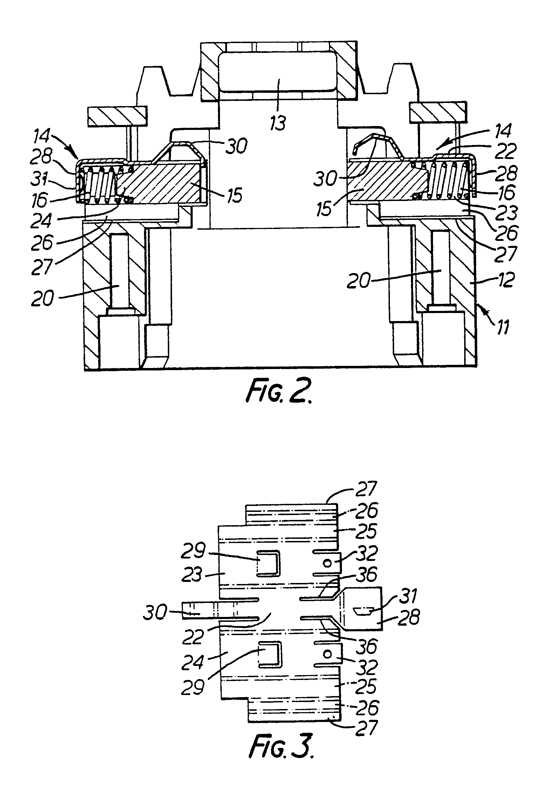

Referring now to Fig. 2, the end cap assembly 11 comprises a plastic body 12, a bearing 13 in which the motor armature shaft is mounted and a pair of brush boxes 14 housing brushes 15 biased towards the armature shaft by springs 16. Strip connectors for making electrical connection between the brush boxes and ends of the field coils of the motor 2, and other strip connectors for making electrical connection between a power supply and ends of the field coils are provided. But these are not shown in Fig. 2. The strip connectors are relatively stiff members and therefore retain their shape during normal use.

The end of the body 12 fits around the end of the stator assembly 9 and has screw threaded bores 20 by which it is bolted to the stator assembly and the end cap 10.

The brush boxes 14 are made by folding sheet metal blanks which are of the form shown in Fig. 3. Referring now to Figs. 2 and 3 each box has a top wall 22, side walls 23 and 24, an end wall 28 with an integral projection 31, a slotted base made up of portions 25 of the blank, legs 26 and feet 27 which extend outwardly from the legs 26.

Each side wall of the brush box has a wing 29 which during manufacture of the box is bent through a small angle so that it projects outwardly from the box. In addition a terminal 32 is formed on each side wall by bending a portion of the wall out to a position substantially perpendicular to the wall. In use, strip connectors are connected to the brush boxes 14 by connection to the terminals 32.

During manufacture the brush box is first bent into the shape of the right hand brush box shown in Fig. 2. It will be seen that the top wall includes an extension 30 which is flat when formed in the blank of Fig. 3 but which is bent into a hook shape above the hollow interior of the box. At this stage the brush 15 and metal spring 16 is inserted into the brush box 14 through the open end opposite the end wall 28 with the spring between the brush 15 and a wall 28. The brush is then pushed into the box against the bias of the spring until the brush is entirely within the box. The hooked extension 30 is then bent down to the position shown on the left hand side of Fig. 2 in which position it acts as a fastening and retains the brush entirely within the brush box.

The brush box and brush assembly is then installed on the body 12 by pushing the boxes into position in a direction perpendicular to and directly towards the motor axis. The feet 27 of each brush box are slid along a groove in the body 12 and as the box reaches the limit of its inward movement, the wings 29 on the box pass hooks formed on the body 12 and spring outwards preventing reverse movement of the brush box.

Once the cap assembly has been installed as part of the motor 2 with the armature in place, the hooked extensions 30 are bent up into the position shown in the right hand side of Fig. 2 allowing the brushes to move out from the brush boxes under their spring bias into contact with the commutator.

In the event that a brush has to be replaced the end wall 28 of the brush box is bent upwards. It has been found in the past that repeated bending of the end wall leads to its breaking off at the junction with the top wall 22. In the embodiment described, slots 36 are provided in the top wall extending from its junction with the wall 28 so that a tongue is defined along a part of the top wall. Movement of the end wall from a closed position in which it obstructs the associated end to prevent removal of a brush to an open position to which the obstruction is substantially removed to enable a brush to be removed or inserted is effected by bending the tongue along a substantial portion of its length.

The tongue thus provides a substantial length along which bending takes place and thus the bending strain at any one location is reduced so that the end wall can be moved repeatedly between the open and closed positions without danger of its breaking off.

The end cap assembly 11 is also described in the Specification of our co-pending European Patent Applications Nos. 84.306138.3 and 84.306140.9 filed on the same date as this Application. Those Specifications also include descriptions of other embodiments of motor components.

## Claims

1. A brush box (14) of sheet material and comprising side and top walls (22, 23, 24), an end wall (28) and an opening opposite the end wall characterised in that the end wall (28) is joined to one of the side walls by means of a tongue of sheet material formed in the one side wall by slots (36) in the one wall such that the end wall (28) is movable between a closed position in which it obstructs the associated end of the brush box and an open position in which the obstruction is substantially removed by bending the tongue along a substantial portion of its length.

2. A brush box as claimed in claim 1 in which the tongue has a length of at least one sixth of the length of the brush box (14).

## Patentansprüche

1. Bürstengehäuse (14) aus Bahnmaterial mit Seiten- und oberen Wänden (22, 23, 24), einer Endwand (28) und einer der Endwand gegenüberliegenden Öffnung, dadurch gekennzeichnet, daß die Endwand (28) mit einer der Seitenwände durch eine Zunge aus Bahnmaterial verbunden ist, die in der einen Seitenwand durch Schlitze (36) in der einen Seitenwand ausgebildet ist, so daß die Endwand (28) zwischen einer geschlossenen Stellung, in der sie das zugehörige Ende des Bürstengehäuses versperrt, und einer geöffneten Stellung bewegbar ist, in der die Versperrung durch Verbiegen der Zunge entlang einem wesentlichen Bereich ihrer Länge im wesentlichen entfernt ist.

2. Bürstengehäuse nach Anspruch 1, bei dem die Zunge eine Länge von mindestens einem Sechstel der Länge des Bürstengehäuses (14) hat.

## Revendications

1. Porte-balai (14) fait d'une matière en feuille et comprenant des parois latérales et supérieure (22, 23, 24), une paroi d'extrémité (28) et une ouverture située à l'opposé de ladite paroi d'extrémité, caractérisé en ce que la paroi d'extrémité (28) est réunie à l'une des parois latérales au moyen d'une languette (30) de matière en feuille délimitée dans ladite paroi latérale par des fentes (36) pratiquées dans cette paroi, de telle façon que la paroi d'extrémité (28) puisse être déplacée entre une position fermée, dans laquelle elle obstrue l'extrémité correspondante du porte-balai et une position ouverte dans laquelle l'obstruction est sensiblement supprimée par pliage de la languette sur une partie notable de sa longueur.

2. Porte-balai selon la revendication 1, dans lequel la languette possède une longueur d'au moins un sixième de la longueur du porte-balai (14).

FIG. I

0 139 451

Fig. 2.

Fig. 3.